# EUROPEAN PATENT APPLICATION

(11) **EP 4 338 909 A1**
(43) Date of publication of application: **20.03.2024**
(21) Application number: 23196497.4
(22) Date of filing: 11.09.2023
(51) Int. Cl.: B27M 1/08, B23D 59/00, B27B 5/06

(54) **IMPROVED METHOD FOR CUTTING A PANEL AND CUTTING SYSTEM THEREOF**

(30) Priority: 15.09.2022 IT 202200018924
(71) Applicant: SCM Group S.p.A., 47921 Rimini (RN) (IT)
(72) Inventor: FRUGIERI, Emilio, 47921 Rimini (IT); CHIARELLI, Andrea, 47921 Rimini (IT); BIAGI, Carlo, 47921 Rimini (IT)
(74) Representative: Tiburzi, Andrea

(57) **Abstract**

The present invention concerns a Method for cutting a panel (P) made of wood, or similar materials, to obtain a plurality of parts (PF, PR, PS) by means of a sectioning machine (1) comprising a supporting plane (2) and a tool assembly (3), said method comprising the steps of processing a cutting pattern (ST) to determine said plurality of parts (PF, PR, PS) from said panel (P); and processing a cutting sequence (LT) as a function of said cutting pattern (ST) to obtain said plurality of parts (PF, PR, PS) from said panel (P), said method being characterized in that it comprises, furthermore, the steps of superimposing, on a real image of said panel (P), information relating to the cutting sequence (LT), said information being able to distinguish at least one part (PF; PR; PS) of said panel (P) to be cut; and cutting said part (PF; PR; PS) from said panel (P), arranged on said supporting plane (2), by means of said tool assembly (3).

The present invention also concerns a cutting system for cutting a panel (P).

## Description

The present invention concerns an improved method for cutting a panel made of wood, or similar materials, to obtain a plurality of parts and cutting system thereof.

### Field of invention

More in detail, the invention concerns an improved method for cutting a panel made of wood, or similar materials, using a cutting machine, in particular a circular saw, but which can be used for any type of working in which the operator intervenes during the steps of working of the panel itself and it is necessary to guide said operator during these steps.

Furthermore, the invention concerns a cutting system comprising a cutting machine, in particular a circular saw, and all the devices, suitably configured, for carrying out the improved method according to the invention.

In the following, the description of this improved method, and the related cutting system, will be addressed to a cutting machine, in particular a circular saw, but it is clear that they should not be considered limited to this specific use.

Still, in what follows, we will always refer to a generic panel, meaning it is made of wood or similar materials, but it is clear that the improved method and the related cutting system described here should not be considered limited to this specific use, as it can be applied for the cutting of panels of any material.

### Prior art

Cutting machines comprising a tool assembly, or cutting tool, in particular a circular saw, for cutting a panel into a plurality of parts, along a cutting direction, are known.

In particular, this panel includes a first side, a second side, a third side, and a fourth side, and it can be positioned on the cutting machine so that the first side and the third side extend substantially perpendicular to the cutting direction, and the second side and the fourth side extend substantially parallel to the cutting direction.

In particular, these cutting machines are configured to cut said panel so that, with each cut, the panel is divided into two parts.

In other words, these cutting machines are designed - not exclusively - to carry out cuts passing through the panel.

These cutting machines include a panel supporting plane. The supporting plane typically includes a fixed portion and a supporting carriage.

This supporting carriage extends, and is movable by an operator, substantially parallel to the cutting direction, to move the aforementioned panel towards and away from the cutting tool. Through this relative motion between the panel and the cutting tool, the panel itself is cut, i.e. divided into two parts.

These cutting machines also include abutment means to refer the panel to the cutting machine. Said abutment means can include first abutment means and second abutment means, positioned opposite the cutting tool, and can be used and alternatively selected by the operator to act as an abutment for the panel during the cutting.

The first abutment means comprise a first abutment element, or line, which can be positioned by the operator in a desired operating position, depending on the dimensions of the panel, along and above the supporting carriage.

This first abutment element extends substantially perpendicular to the cutting direction and includes a first abutment wall arranged, in use, to abut the first side or the third side of the panel.

The first abutment means further comprises one or more abutments, or stops, slidably supported by the first abutment element.

These abutments can be manually positioned by the operator along the first abutment element in a plurality of working positions. In other known forms, these abutments can be automatically positioned, by means of actuators, along the first abutment element in a plurality of working positions.

In particular, each abutment is movable between an active position, in which the abutment interacts with, and acts as an abutment for, the second side or the fourth side of the panel, and an inactive position, in which the abutment does not interact with the panel.

The second abutment means, which can be used alternatively to the first abutment means, comprise a second abutment element, or guide, which can be manually, or automatically, movable via an actuator, towards or away from the cutting tool, substantially perpendicular to the cutting direction.

In particular, this second abutment element extends substantially parallel to the cutting direction and includes a second abutment wall, arranged, in use, to abut the second or fourth side of the panel.

These cutting machines can also include a screen, or display, through which the operator can interact with the cutting machine.

In particular, this screen allows the operator to provide the dimensions of the panel to be cut and the further dimensions of the parts into which it is desired to cut the panel with an optimization software, designed to optimize the cuts to be made on the panel to obtain the aforementioned parts, minimizing the waste.

This screen also allows the view of a diagram (the so-called cutting diagram) of the panel divided into the aforementioned parts, as well as the dimensions of these parts, and a list of cuts to be made, the diagram, the dimensions, and the list being processed by the optimization software.

When the operator wants to cut the panel into the aforementioned parts, he has to perform a plurality of operations.

In particular, these operations may initially include taking the dimensions of the aforementioned parts provided by the optimization software onto the panel.

Subsequently, these operations include, for each cut, choosing how to position the panel on the cutting machine, i.e., whether to position the panel against the first abutment means or against the second abutment means, and carrying out the necessary calculations to correctly position the abutments on the first abutment element or alternatively on the second abutment element with respect to the cutting tool.

It is clear that these operations are extremely slow and laborious to carry out and have to be carried out by an expert and qualified operator, i.e. one with sufficient experience.

Furthermore, these operations are particularly complex and can lead to errors or non-optimal operator choices, even if the operator is expert, which can increase working waste.

The European patent EP2090394A2 teaches a method for cutting a panel into a plurality of parts, using a cutting machine, including the steps of:
A. providing a graphic visualization of said panel divided into said plurality of parts; and
B. providing a graphical visualization of a sequence of operations that indicate how to manipulate said panel, so as to divide said panel into said plurality of parts.

However, this method forces the operator to continuously move his gaze from the screen to the cutting machine and/or to the panel, and vice versa, making it uncomfortable and complex for the operator.

Furthermore, the operator is forced to look away from the panel, from the working plane, from the abutments, and this could lead to errors, even if the operator is an expert, leading to an increase in working waste.

Furthermore, having to move his gaze from the screen to the cutting machine, and in particular from the cutting tool, and vice versa, the operator, thus distracted, is put in a dangerous situation.

### Scope of the invention

In light of the above, it is, therefore, scope of the present invention to provide an improved method for cutting a panel that is simple and fast, even for an inexperienced operator.

Another scope of the invention is to significantly reduce the possibility of error and, consequently, working waste.

Furthermore, a scope of the invention is to significantly reduce the risk of accidents for the operator, reducing sources of distraction during the machining sequences of the panel itself.

A further scope of the present invention is to provide the instruments necessary for carrying out the improved method and the apparatus which carry out this improved method.

### Object of the invention

These and other results are obtained according to the invention with an improved method for cutting a panel.

It is, therefore, specific object of the present invention a method for cutting a panel made of wood, or similar materials, to obtain a plurality of parts by means of a sectioning machine comprising a supporting plane and a tool assembly, said method comprising the steps of: A. processing a cutting pattern to determine said plurality of parts from said panel; andB. processing a cutting sequence as a function of said cutting pattern to obtain said plurality of parts from said panel, said method being characterized in that it comprises, furthermore, the steps of: C. superimposing, on a real image of said panel, information relating to the cutting sequence, said information being able to distinguish at least one part of said panel to be cut; and D. cutting said part from said panel, arranged on said supporting plane, by means of said tool assembly.

Again according to the invention, said superimposing step C can take place using an augmented reality display.

Still according to the invention, said method may repeat steps C and D until the end of the cutting sequence, in such a way as to obtain said plurality of parts from said panel.

Advantageously according to the invention, said information shows whether said at least one part is a finished part, a rest, or a waste.

Further according to the invention, said information may comprise at least one dimension of said at least one part and/or an identification code and/or a cutting sequence code.

Preferably according to the invention, said method may comprise the step of: E. superimposing on a real image of said at least one part of said panel said information even after said part has been cut from said panel.

Still according to the invention, said method may comprise the steps of: F. processing a first target position of said panel on said supporting plane as a function of said cutting sequence; and G. superposing information relating to said first target position on said real image of said cutting machine.

Still according to the invention, said method may comprise the step of: H. providing feedback to an operator when said panel is in correspondence with said first target position, said feedback being, for example, of the optical, acoustic, haptic, vibrational type.

Furthermore, according to the invention, said method may comprise the steps of: I. processing a second target position of abutment means of said cutting machine as a function of said cutting sequence; and L. superposing on said real image of said cutting machine information relating to said second target position.

Advantageously according to the invention, said method may comprise the step of: M. providing feedback to an operator when said abutment means is in correspondence with said second position target, said feedback being, for example, of the optical, acoustic, haptic, vibrational type.

Preferably according to the invention, said method may comprise the steps of: N. processing a third target position and/or a fourth target position and/or a fifth target position of said part, after said part has been cut from said panel, where said third target position represents a stack of finished parts, said fourth target position represents a stack of rest and said fifth target position represents a stack of wastes; and O. superimposing on a real image of the environment surrounding said cutting machine information relating to said third target position and/or said fourth target position and/or said fifth target position.

Still according to the invention, said method may comprise the step of: P. providing feedback to an operator when said part, after being cut from said panel, is located in correspondence with said third target position, or with said fourth target position, or with said fifth target position, said feedback being, for example, of the optical, acoustic, haptic, vibrational type.

It also forms object of the present invention a computer program comprising instructions which, when the program is executed by a computer, causes the computer to execute the steps A-P of the method as defined above.

A further object of the present invention is a computer-readable storage medium comprising instructions which, when executed by a computer, causes the computer to execute the method steps of the method as defined above.

It also forms object of the present invention a cutting system for cutting a panel made of wood, or similar materials, into a plurality of parts, comprising: a cutting machine; and a processing unit, said cutting machine comprising a tool assembly for cutting said panel into a plurality of parts; a supporting plane to support said panel; and abutment means for referring said panel with respect to said cutting machine, said processing unit comprising: a memory unit, containing a cutting pattern and a sequence of cutting to obtain said plurality of parts from said panel,
said cutting system being characterized in that it comprises a device for augmented reality, in that said device for augmented reality is in communication with said processing unit, so as to be able to exchange information from and to said processing unit, and it is configured to superimpose information on a real image received by said processing unit, and in that said processing unit is programmed to exchange information with said device for augmented reality, in such a way as to carry out the improved method as defined above.

Still the object of the present invention, said augmented reality is a display configured to superimpose additional information on real images.

### Brief description of the figures

The present invention will now be described for illustrative but not limitative purposes, according to its preferred embodiments, with particular reference to the figures of the attached drawings, in which:
figure 1 shows an axonometric view of a circular saw and wearable augmented reality devices for carrying out the improved method according to the invention;
figure 2 shows a plan view of a circular saw, of a panel arranged above it and of information visible in augmented reality, via a viewer for augmented reality, for carrying out the improved method according to the invention;
figure 3 shows a view of a panel and information visible in augmented reality, through a viewer for augmented reality, for carrying out the improved method according to the invention;
figure 4 shows an example of a cutting diagram as it is typically displayed on the screen of known cutting machines;
figure 5 shows an axonometric view of a circular saw and an augmented reality display device, for carrying out the improved method according to the invention;
figure 6 shows a further axonometric view of a circular saw and an augmented reality display device, for carrying out the improved method according to the invention; and
figure 7 shows a flowchart of the improved method for cutting a panel according to the present invention.

### Detailed description

In the various figures the similar parts will be indicated with the same numerical references.

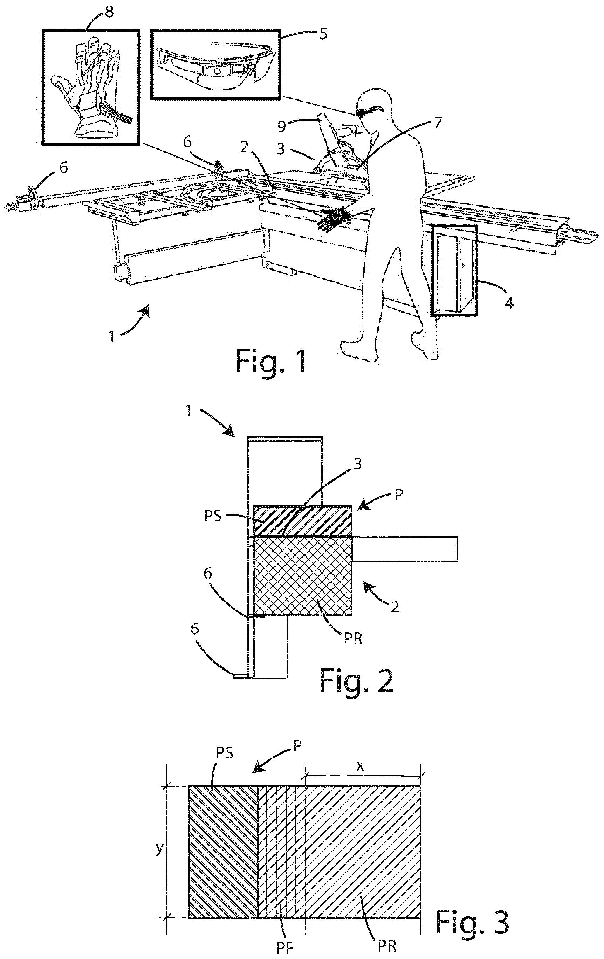

Referring to figure 1, a cutting machine 1 is shown, in particular a circular saw, comprising a supporting plane 2 for supporting a panel P made of wood, or similar materials, and a tool assembly 3, or cutting tool, suitable for cutting the panel P in a plurality of parts PF, PR, PS, and defining a cutting direction.

The numerical reference 9 shows a chip suction device, arranged above said supporting plane 2, in correspondence with said tool assembly 3.

The chip suction device 9 is typically connected to a vacuum pump and a chip collector (not shown in the figure). When tool assembly 3 cuts the panel P, chips are generated.

The chip is then intercepted and exited by said suction device 9.

The suction system can be vertically movable so as to adapt to the different heights of the panel P to be cut.

The cutting machine 1 also includes abutment means 6, 7 to refer the panel P with respect to the cutting machine 1 itself.

Said abutment means 6, 7 include first abutment means 6 and second abutment means 7, positioned opposite to the cutting tool 3, and can be used and selected alternatively by the operator to act as a abutment for the panel P during cutting.

The first abutment means 6 comprise a first abutment element, or line, which can be positioned by the operator in a desired operating position, depending on the dimensions of the panel P, along and above the supporting carriage.

This first abutment element extends substantially perpendicular to the cutting direction and includes a first abutment wall arranged, in use, to abut the first side or the third side of the panel P.

The first abutment means 6 further comprise one or more abutments 6, or stops, slidably supported by the first abutment element.

These abutments 6 can be manually positioned by the operator along the first abutment element in a plurality of working positions. In other known forms, these abutments 6 can be automatically positioned, by means of actuators, along the first abutment element in a plurality of working positions.

In particular, each abutment 6 is mobile between an active position, in which the abutment interacts with, and acts as an abutment for the second side or the fourth side of the panel P, and a non-active position, in which the abutment does not interact with the panel P.

The second abutment means 7, which can be used alternatively to the first abutment means, comprise a second abutment element, or guide, which can be moved manually or automatically, via an actuator, towards or away from the cutting tool 3 substantially perpendicular to the cutting direction.

In particular, this second abutment element extends substantially parallel to the cutting direction and includes a second abutment wall 7 arranged, in use, to abut the second or fourth side of the panel P.

Still with reference to figure 1, the cutting machine 1 includes a processing unit 4. The processing unit 4 includes communication means (not shown in the figure) to communicate from and to external electronic devices, and a memory unit (not visible in the figure) containing a cutting pattern ST and a cutting sequence LT, to obtain said plurality of parts PF, PR, PS from said panel P.

In other embodiments, the processing unit 4 can be remoted, i.e. placed in a remote position with respect to the cutting machine 1.

Again, in other embodiments, the processing unit 4 can be distributed, i.e. it can include several parts that are physically separated and placed in different places, but interconnected with each other, so as to carry out the required functions.

The processing unit 4 can be, for example, a Personal Computer, a numerical control, a cloud server, an embedded electronic board, or a combination of these, and it can run software.

In particular, the processing unit 4 can execute an optimization software designed to optimize the cuts to carry out on the panel P to obtain the aforementioned plurality of parts PF, PR, PS, minimizing the waste PS, as defined below.

The optimization software then generates a cutting pattern ST, which is then stored in the memory unit.

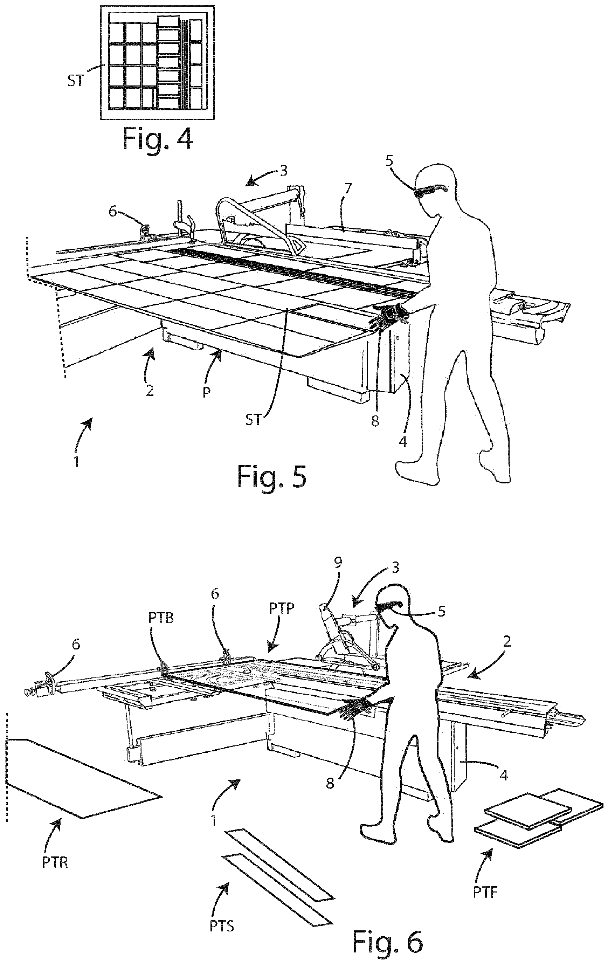

An example of a cutting pattern ST, according to the prior art, is represented in figure 4.

This cutting pattern ST includes finished parts PF, i.e. the parts that represent the desired result of the cutting operation, rests PR, i.e. parts of the panel P that can be reused to carry out other cuts and obtain other finished parts PF, and waste PS, i.e. non-reusable parts of the panel P.

Furthermore, the processing unit 4 can execute a software for calculating the cutting sequence LT, which is then stored inside the memory unit.

The cutting sequence LT includes a cutting list, which is processed on the base of the cutting pattern ST.

In other words, the cutting sequence LT includes a succession of individual cuts suitable for creating the cutting pattern ST, i.e. the cutting operations to be carried out on the panel P to obtain the aforementioned plurality of parts PF, PR, PS.

With reference to figure 1, a first device 5 for augmented reality is shown, in particular a viewer 5 for augmented reality, and a second device 8 for augmented reality, in particular an instrumented glove 8, both worn by an operator.

Augmented reality means an operational/sensory modality in which an operator is provided with additional information, in addition to that perceived by the operator himself through his five senses.

The viewer 5 for augmented reality is configured so that additional information can be superimposed on a real image, thus increasing the reality perceived by the operator.

The viewer 5 for augmented reality, for example, can be glasses having a transparent screen, so that the operator's eye can see the real image of the space around him in transparency. In further embodiments, the viewer 5 can be another device, such as contact lenses wearable by the operator.

On this transparent screen, the viewer 5 for augmented reality can project graphic signs such as, for example, shapes, colors and/or alphanumeric symbols, providing the operator with additional information relating to the real image of the space, or objects, that s/he is observing with his/her own eyes.

The instrumented glove 8, for example, can be a glove comprising actuators, or transducers, to provide further stimuli to the operator, for example, of a haptic and/or vibrational type, providing the operator with additional information compared to that perceived by his/her senses.

Both the first device 5 and the second device 8 are in communication with the processing unit 4, so as to be able to exchange information from and to the processing unit 4 itself.

Furthermore, the first device 5 and the second device 8 can directly communicate with each other, for example in a bidirectional way.

With reference to figure 2, a panel P is shown placed on the supporting plane 2 of the cutting machine 1. Superimposing on the real image of said panel P, information relating to the cutting sequence LT, that allows the identification of a part PR, PS of said panel P to be cut, is visible.

This information is made visible to the operator via the viewer 5 for augmented reality. In particular, the visible information is two distinct hatchings that each distinguishes one a part PR, PS of said panel P, in such a way as to identify a part PR, PS of said panel P to be cut.

In other embodiments, other graphic shapes can be used to identify a part PR, PS of said panel P to be cut, such as, for example, colors, symbols, numbers, words.

With particular reference to figure 3, a real image of said panel P is shown, on which information has been superimposed, in augmented reality mode, relating to the cutting sequence LT that allows identifying a part PF, PR, PS of said panel P.

This information is made visible to the operator via the viewer 5 for augmented reality.

In particular, the visible information are three distinct hatchings, which respectively distinguish a finished part PF, a rest PR, and a waste PS of said panel P, and which represent parts of the panel P to be cut. Equal hatches can be used to distinguish equal parts, i.e. all the finished parts, all rests, or all waste.

Furthermore, always with reference to figure 3, the information visible in augmented reality includes a first portion, or dimension, X and a second portion Y related to a rest PR, but it is clear that this information can contain all the portions of the plurality of parts PF, PR, PS of the panel P, or a subset thereof.

In other embodiments, the visible information may also contain indications of the production lot, part-specific identifiers and/or identifiers of the step being executed, or to be executed, of the cutting sequence (LT).

With reference to figure 5, the real image of the panel P, positioned on the supporting plane 2 of the cutting machine 1, is superimposed, in augmented reality, via the viewer 5, on the information of the entire cutting pattern ST.

In other embodiments, the superimposed information, in augmented reality, can also include the nature of the plurality of parts PF, PR, PS, the portions, other identification codes, as already described above, or subsets of all this information.

With the reference PTP, in figure 5, a first target position is identified, which represents the position that the panel P has to assume, on the supporting plane 2 of the cutting machine 1, in order to perform the cut relating to the current step of the cutting sequence LT.

The first target position can be processed by the processing unit 4, and it is made visible to the operator, in augmented reality, via the viewer 5.

With the reference PTB a second target position is identified, which represents the position that a stop 6, or the second abutment wall 7, in order to correctly refer the panel P, to carry out the cut relating to the current step of the cutting sequence LT.

The second target position can be processed by the processing unit 4 and is made visible to the operator, in augmented reality, via the viewer 5.

With the reference PTF, PTR, and PTS, a third target position, a fourth target position, and a fifth target position are respectively identified, which represent the stacks, or magazines, near the cutting machine 1, where the operator will place, respectively, the finished parts PF, the rests PR, and the waste PS, during cutting operations.

The third target position, the fourth target position, and the fifth target position can each be processed by the processing unit 4, and are made visible to the operator, in augmented reality, via the viewer 5.

The operation of the improved method, according to the invention, is as follows.

The processing unit 4 runs the optimization software to generate a cutting pattern LT, which is stored in a memory unit.

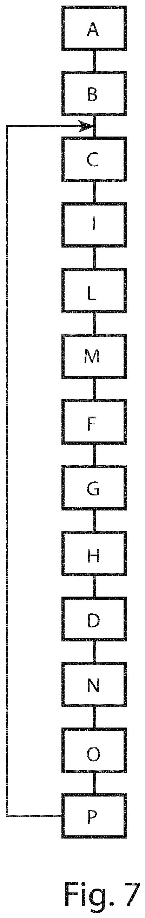

This operation, or step, is identified, in figure 7, with reference A.

Once defined, the cutting pattern LT that allows the optimization of the panel P so as to have the least waste possible, the processing unit runs a software to generate a cutting sequence, namely, the list of cuts (or operations or steps or phases) to obtain, from the panel P, a plurality of parts PF, PR, PS, which is stored in the memory unit.

The plurality of parts PF, PR, PS typically includes finished parts, rests and waste.

This step is identified, in figure 7, with reference B.

The operator, who has to carry out the cutting sequence LT, wears a viewer 5 for augmented reality.

Looking at the panel P, the operator sees augmented reality information superimposed on the real image of the panel P itself.

With references to figure 5, the operator can request to the processing unit 4, for example, via an HMI, or by using a command that is also in augmented reality or virtual reality, to show the entire cutting pattern ST in augmented reality, superimposing on the real image of panel P, or a subset of his/her choice, as shown in figure 3.

With reference to figure 2, the operator sees the panel divided into two parts PS, PR, each highlighted by a different hatching. In other embodiments, as already described above, different colors may be used to distinguish the two parts.

The parts PS, PR highlighted in this way provide the operator with an indication of the type of cut to be carried out and therefore guide him to carry out the first step of the cutting sequence LT.

This step is identified, in figure 7, with reference C.

The operator, thus guided, positions the panel P on the supporting plane 2 and, by moving the supporting carriage, moves the panel P itself towards the tool assembly 3, carrying out the cut.

This step is identified, in figure 7, with the reference D.

In order to further help the operator in carrying out the first cut of the cutting sequence LT, the processing unit 4 processes a second position PTB, as described above.

This step is identified, in figure 7, with reference I.

The operator positions the stop 6, or the second abutment wall 7, in correspondence with said second target position PTP.

This step is identified, in figure 7, with the reference L.

If the operation is executed correctly, the cutting system sends a positive feedback to the operator.

The feedback can be a flash, or the projection of a symbol, in augmented reality provided to the operator, via the viewer 5.

Furthermore, other types of feedback can also be used, such as, for example, acoustic, haptic, or vibrational, generated via transducers, or actuators, placed on the cutting machine 1, on the viewer 5 and/or on other wearable devices for augmented reality, such as, for example, the instrumented glove 8.

This step is identified, in figure 7, with the reference M.

Alternatively, the cutting system can send a negative feedback to the operator if the operation has not been executed correctly.

Still, in order to further help the operator in carrying out the first cut of the cutting sequence LT, the processing unit 4 processes a first target position PTP, as described above.

This step is identified, in figure 7, with the reference F.

The first target position PTP is shown to the operator, via the viewer 5, in augmented reality, superimposed on the real image of the cutting machine 1.

This step is identified, in figure 7, with the reference G.

The operator positions the panel P in correspondence with said first target position PTP.

If the operation is executed correctly, the cutting system sends a positive feedback to the operator, similarly to what is described for the M step.

This step is identified, in figure 7, with the reference H.

Always with reference to figure 7, and to step C, once the first cut has been performed, the information shown, in augmented reality, superimposed on the real image of panel P, changes, providing the operator with the indication to carry out the second cut of the cutting sequence LT, and so on, until the entire cutting sequence is completely executed.

During the execution of the cutting sequence LT, the panel P will be divided into a plurality of parts PF, PR, PS, which represent finished parts, rests, and waste.

These parts PF, PR, PS have to be arranged, at least temporarily, in piles, near the cutting machine 1.

The information superimposed on the real image of the panel P can also provide information about the nature of the part itself, i.e. whether it is a finished part PF, a rest PR, or a waste PS.

To help the operation in this step of manipulation of the plurality of parts PF, PR, PS cut from said panel P, the processing unit 4 can process a third PTF, a fourth PTR, and a fifth PTS target position, which respectively represents the target position for finished parts PF, rests PR, and waste PS.

This step is identified, in figure 7, with reference N.

The third PTF, the fourth PTR, and the fifth PTS target position are shown to the operator, via the viewer 5, in augmented reality, superimposed on the real image of the space surrounding the cutting machine 1.

This step is identified, in figure 7, with the reference O.

The operator positions the finished parts PF, the rests PR, and the waste PS at said third PTF, fourth PTR, and fifth PTS target position, as the plurality of parts PF, PR, PS are cut from the panel P.

At each correct positioning of said parts PF, PR, PS, the cutting system sends a positive feedback to the operator in a way similar to that described for the M and H steps.

### Advantages

It is an advantage of the present invention that of providing an improved method for cutting a panel into a plurality of parts, and the related cutting system, which does not require the operator to look away from the panel, or from the cutting machine, to follow a cutting sequence, so as to make safer the use of the cutting machine itself.

Another advantage of the present invention is to guide the operator in positioning the panel on the cutting machine itself, in such a way as to reduce the possibility of error and, therefore, the increase in waste parts.

A further advantage of the present invention is to guide the operator in positioning the abutments of the cutting machine, in such a way as to reduce the possibility of error and, therefore, the increase in waste parts.

Furthermore, an advantage of the present invention is that of providing the operator with information about the cut parts, in such a way as to help the operator in manipulating such parts, for example, by providing information about the production lot, the dimensions of the part, the nature of the part, i.e. whether it is a finished piece, a rest, or a waste.

Another advantage of the present invention is that of guiding the operator on the positioning of the cut parts, generating piles of finished parts, rests, and waste, reducing the risk of mixing panels of different nature, improving the working efficiency, the speed of execution, and reducing the risk of error.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Method for cutting a panel (P) made of wood, or similar materials, to obtain a plurality of parts (PF, PR, PS) by means of a sectioning machine (1) comprising a supporting plane (2) and a tool assembly (3), said method comprising the steps of:
A. processing a cutting pattern (ST) to determine said plurality of parts (PF, PR, PS) from said panel (P); and
B. processing a cutting sequence (LT) as a function of said cutting pattern (ST) to obtain said plurality of parts (PF, PR, PS) from said panel (P),
said method being **characterized in that** it comprises, furthermore, the steps of:
C. superimposing, on a real image of said panel (P), information relating to the cutting sequence (LT), said information being able to distinguish at least one part (PF; PR; PS) of said panel (P) to be cut; and
D. cutting said part (PF; PR; PS) from said panel (P), arranged on said supporting plane (2), by means of said tool assembly (3).

2. Method for cutting a panel (P) according to the preceding claim, **characterized in that** said superimposing step C takes place using an augmented reality display.

3. Method for cutting a panel (P) according to any one of the preceding claims, **characterized by** repeating steps C and D until the end of the cutting sequence (LT), in such a way as to obtain said plurality of parts (PF, PR, PS) from said panel (P).

4. Method for cutting a panel (P) according to any one of the preceding claims, **characterized in that** said information shows whether said at least one part (PF; PR; PS) is a finished part (PF), a rest (PR), or a waste (PS).

5. Method for cutting a panel (P) according to any one of the preceding claims, **characterized in that** said information comprises at least one dimension (x, y) of said at least one part (PF, PR, PS) and/or an identification code and/or a cutting sequence code (LT).

6. Method for cutting a panel (P) according to any one of the preceding claims, **characterized in that** it comprises the step of:
E. superimposing on a real image of said at least one part (PF; PR; PS) of said panel (P) said information even after said part (PF; PR; PS) has been cut from said panel (P).

7. Method for cutting a panel (P) according to any one of the preceding claims, **characterized in that** it comprises the steps of:
F. processing a first target position (PTP) of said panel (P) on said supporting plane (2) as a function of said cutting sequence (LT); and
G. superposing information relating to said first target position (PTP) on said real image of said cutting machine (1).

8. Method for cutting a panel (P) according to the previous claim, **characterized in that** it comprises the step of:
H. providing feedback to an operator when said panel (P) is in correspondence with said first target position (PTP), said feedback being, for example, of the optical, acoustic, haptic, vibrational type.

9. Method for cutting a panel (P) according to any one of the preceding claims, **characterized in that** it comprises the steps of:
I. processing a second target position (PTB) of abutment means (6, 7) of said cutting machine (1) as a function of said cutting sequence (LT); and
L. superposing on said real image of said cutting machine (1) information relating to said second target position (PTB).

10. Method for cutting a panel (P) according to the preceding claim, **characterized in that** it comprises the step of:
M. providing feedback to an operator when said abutment means (6, 7) is in correspondence with said second position target (PTB), said feedback being, for example, of the optical, acoustic, haptic, vibrational type.

11. Method for cutting a panel (P) according to any one of the preceding claims, **characterized in that** it comprises the steps of:
N. processing a third target position (PTF) and/or a fourth target position (PTR) and/or a fifth target position (PTS) of said part (PR; PS), after said part (PF; PR; PS) has been cut from said panel (P), where said third target position (PTF) represents a stack of finished parts, said fourth target position (PTR) represents a stack of rest and said fifth target position (PTS) represents a stack of wastes; and
O. superimposing on a real image of the environment surrounding said cutting machine (1) information relating to said third target position (PTF) and/or said fourth target position (PTR) and/or said fifth target position (PTS).

12. Method for cutting a panel (P) according to the previous claim, **characterized in that** it comprises the step of:
P. providing feedback to an operator when said part (PF; PR; PS), after being cut from said panel (P), is located in correspondence with said third target position (PTF), or with said fourth target position (PTR), or with said fifth target position (PTS), said feedback being, for example, of the optical, acoustic, haptic, vibrational type.

13. A computer program comprising instructions which, when the program is executed by a computer, causes the computer to execute the steps A-P of the method according to any one of claims 1-11.

14. A computer-readable storage medium comprising instructions which, when executed by a computer, causes the computer to execute the method steps according to any one of claims 1-11.

15. Cutting system for cutting a panel (P) made of wood, or similar materials, into a plurality of parts (PF, PR, PS), comprising:
- a cutting machine (1); and
- a processing unit (4),
said cutting machine (1) comprising
- a tool assembly (3) for cutting said panel (P) into a plurality of parts (PF, PR, PS);
- a supporting plane (2) to support said panel (P); and
- abutment means (6) for referring said panel (P) with respect to said cutting
machine (1),
said processing unit (4) comprising:
- a memory unit, containing a cutting pattern (ST) and a sequence of cutting (LT) to obtain said plurality of parts (PF, PR, PS) from said panel (P),
said cutting system being **characterized**
**in that** it comprises a device (5) for augmented reality (5),
**in that** said device (5) for augmented reality is in communication with said processing unit (4), so as to be able to exchange information from and to said processing unit (4), and it is configured to superimpose information on a real image received by said processing unit (4), and
**in that** said processing unit (4) is programmed to exchange information with said device (5) for augmented reality (5), in such a way as to carry out the improved method according to any of claims 1 to 11.

16. Cutting system according to the preceding claim, **characterized in that** said device (5) for augmented reality is a display configured to superimpose additional information on real images.
